# EUROPEAN PATENT SPECIFICATION

(11) **EP 1 534 069 B1**
(45) Date of publication and mention of the grant of the patent: **08.04.2009**
(21) Application number: 02799971.3
(22) Date of filing: 19.12.2002
(51) Int. Cl.: A01N 27/00, A01N 37/44

(54) **PROMOTING EARLY ESTABLISHMENT OF POTATO CROPS BY ETHYLENE INHIBITORS**
FORDERUNG DES FR HEN ANWACHSENS VON KARTOFFELKULTUREN DURCH ETHYLENHEMMER
PROCEDE DESTINE A FAVORISER L'IMPLANTATION PRECOCE DE CULTURES DE POMMES DE TERRE AU MOYEN D'INHIBITEURS DE L'ETHYLENE

(30) Priority: 09.08.2002 US 402353 P
(43) Date of publication of application: 01.06.2005
(73) Proprietor: Valent Biosciences Corporation, Libertyville Illinois 60048 (US)
(72) Inventor: HANSEN, James, Bensenville, IL 60106 (US); WOOLARD, Derek, Waukegan, IL 60087 (US); JU, Zhiguo, Grayslake, IL 60030 (US); WARRIOR, Prem, Green Oaks, IL 60048 (US); PETRACEK, Peter, D., Grayslake, IL 60030 (US)
(74) Representative: Modiano, Micaela Nadia
(86) International application number: PCT/US2002/041047
(87) International publication number: WO 2004/014137

(56) References cited:
- WO-A-98/12173
- US-A- 3 879 188
- US-A- 5 518 988
- US-A- 5 811 372
- US-A1- 2002 035 146
- US-B1- 6 194 350
- US-B1- 6 313 068
- US-B2- 6 365 549

## Description

### FIELD OF THE INVENTION

This invention relates to a method for promoting sprouting and sprout elongation by administering to potato tubers an effective amount of an ethylene synthesis inhibitor such as aminoethoxyvinylglycine (AVG) or its derivatives thereof or acceptable salts thereof or an ethylene action inhibitor such as 1-methylcyclopropene (MCP) or its derivatives thereof or combinations thereof.

### BACKGROUND OF THE INVENTION

The potato (*Solanum tuberosum* Linn) is a tuberous-rooted vegetable crop of major economic importance worldwide. It is the fourth most cultivated food crop after wheat, rice and maize and therefore, the most important dicotyledonous and tuber crop. Potato growers produce over 300 million tons of potatoes annually.

Between harvesting and planting, at least some potato tubers are kept in storage until the time for planting the next season's crop. During maturation, the potato tuber becomes dormant through an internally controlled mechanism. During this phase of tuber dormancy, the potato tuber must undergo certain physiological changes to break dormancy and allow the potato tuber to sprout. In general, potato tuber dormancy is defined as a lack of growth due to the physicochemical condition of the tuber, which is influenced by a number of factors including plant hormones and storage temperature (Burton, W.G., 1963, Concepts and mechanism of dormancy, pp 17-41, In: J. D. Ivins and F.L. Milthorpe, eds., The Growth of the Potato, Butterworths, London).

Early season crop establishment is critical for potato production. Rapid establishment at the beginning of the season provides a head start that can promote early canopy closure and thus naturally reduce weed populations. Early season growth also helps take advantage of the cooler, wetter months of spring and thus provides a higher crop density, and potentially, higher yields.

Promoting early establishment in potato tubers may be achieved by chemical treatment. Rindite^{™} has been used in the treatment of potato tubers to hasten sprouting (Denny, F. E., 1984, Synergistic effects of three chemicals in the treatment of dormant potato tubers to hasten germination, Contrib. Boyce Thompson Inst., Plant Res. 14:1-14.) However, chemical treatments such as Rindite^{™}, pose high toxicity risks, both for the workers handling the chemicals and for the environment. Gibberellin (GA3) has been used to promote sprout elongation and stand establishment, but the effectiveness of GA3 can be inconsistent and the resulting sprouts can be brittle. Consequently, alternative agents are needed to promote early crop establishment of potatoes. In particular, there is a need to promote sprouting and sprout elongation in potatoes and reduce necrosis in the tips of potato sprouts.

Ethylene, a naturally-occurring, gaseous plant hormone, is believed to be involved in the modulation of a number of potato tuber biochemical pathways and processes such as sprouting and sprout elongation. In general, ethylene or ethylene releasing compounds like ethephon enhances release from dormancy and increases sprouting of potato tubers (Alam, et al. 1994, The effect of ethylene and of inhibitors of protein and nucleic acid syntheses on dormancy break and subsequent sprout growth, Potato Research 37:25-33; Minato et al., 1979, Effect of ethylene on sprout growth and endogenous growth substances of potato plants, J. Fac. Agr. Hokkaido Univ., 59, Pt. 2; Rama, M. V. and Narasimham, P., 1981, A comparative study on the effect of gibberellic acid, ethrel, and ethylene chloride on potato (Solanum tuberosum Linn) sprouting, Food Sci. Technol. 19: 144-47; Rylski et al.., 1974, Dual effects of ethylene on potato dormancy and sprout growth, Plant Physiol. 53: 658-662). However, ethylene or ethylene releasing compounds also inhibit sprout elongation (Minato, et al. 1979; Rylski, et al., 1974), which in turn makes ethylene treatment undesirable for rapid crop establishment.

The effect of pre-plant application of ethylene inhibitors on potato sprouting has not been documented. Suttle (1998, Involvement of ethylene in potato microtuber dormancy, Plant Physiol. 118: 843-848) reported that treatment of potato explants with ethylene action inhibitors 2,5-norbornadiene and silver nitrate caused precocious sprouting of microtubers. These applications were made during the initiation and growth phases of microtuber development and thus consisted of treatment during the early stages of dormancy. However, Suttle (1998) does not disclose that ethylene inhibitors promote sprouting or sprout elongation in stored seed potatoes.

Surprisingly, we have found that when applied to stored seed potato tubers, ethylene inhibitors such as aminoethoxyvinylglycine (AVG, CAS #: 55720-26-8) or 1-methylcyclopropene (MCP, CAS#: 3100-04-7) promote sprouting and sprout elongation, which makes these inhibitors ideal candidates for promoting early establishment of potato crops. Furthermore, AVG treatment also reduces sprout tip necrosis of potatoes.

### SUMMARY OF THE INVENTION

This invention provides a method for increasing the number and length of sprouts in potato crops by treating potato tubers with ethylene inhibitors such as aminoethoxyvinylglycine (AVG, CAS #: 55720-26-8) and/or its salts such as aminoethoxyvinylglycine hydrochloride or its derivatives or 1-methylcyclopropene (MCP, CAS#: 3100-04-7) and/or its derivatives as disclosed in U S Patent No. 6,194,350 (Sisler, E.C., 2001, Method of blocking ethylene response in plants using cyclopropene derivatives).

The ethylene inhibitors are aminoethoxyvinylglycine (AVG) or its salts such as aminoethoxyvinylglycine hydrochloride or 1-methylcyclopropene (MCP) and/or their derivatives.

The aminoethoxyvinylglycine may be administered in a water-based solution at a concentration of from about 1 ppm to about 5000 ppm. The MCP may be administered in a gas at a concentration of from about 0.001 ppm to about 500 ppm.

The water-based solution of AVG may further comprise about 0.01 to 0.05% w/v surfactant.

The potato varieties are preferably selected from the group consisting of, but not limited to, Gold Rush, Irish Cobbler, Kennebac, Norkotah, Norland, Red Lasoda, Red Norland, Red Pontiac, Russet Burbank, and Superior.

### DETAILED DESCRIPTION

This invention is directed to a method of increasing the number and length of sprouts in potato crops, which method comprises the steps of treating the potato tubers with an effective, but non-injurious amount of an ethylene synthesis inhibitors such as AVG and/or its derivatives and/or its salts or ethylene action blockers such as MCP and/or its derivatives prior to planting.

Biologically acceptable salts of AVG include those of the common alkali metals sodium and potassium, the alkaline earths magnesium or calcium, zinc, or ammonium or simple alkylammonium cations such as mono-, di-, tri- or tetramethylammonium or other ammonium cations bearing up to 7 carbons. Salts based on strong inorganic and organic acids, for example HCl (e.g. aminoethoxyvinylglycine hydrochloride, the preferred growth regulator), HBr, H₂SO₄ or HNO₃, are also suitable.

Depending on the type of early growth required, the application concentrations of AVG or its salts can vary within wide limits and are generally in the range of from about 1 ppm to about 5000 ppm, preferably from about 10 ppm to about 1000 ppm in a solvent, preferably water. The water solvent may further comprise from about 0.01 to 0.05% w/v surfactants such as Silwet (polyalhyleneoxide modified heptamethyltrisiloxane, Loveland Industries, Inc, Greeley, CO). Using water as the carrier solvent is preferred because AVG is highly soluble in water. It should be understood that the water solvent may consist of other dissolved compounds known in the art such as nitrates.

The application concentrations of MCP or its derivatives can vary within wide limits and are generally in the range of from about 0.001 ppm to about 1000 ppm, preferably from about 1 ppm to about 100 ppm as a gas released from a powder.

The effective concentration range of the active ingredient may depend on the volume applied to the potato tubers as well as other factors such as the density of tubers to be treated. Thus, the preferred range of concentration is that range that produces early growth in potato tubers and which is not overly wasteful or so extreme in concentration that the solvent is so saturated with the active ingredient that some of the active ingredient is not dissolved in the carrier solvent. While the preferred range of AVG is between about 10 ppm and about 2000 ppm and MCP is between 0.1 ppm and 100 ppm, the invention is not limited to this range since the amount of active ingredient required will partly depend on the number of tubers per unit area as might be reasonably understood.

It also should be understood that the concentration range of the active ingredient AVG or its derivatives or its salts or MCP or its derivatives includes in principle any concentration range useful for promoting early growth in potato tubers.

The invention may be illustrated by the following representative, non-limiting examples. Chemicals used in these examples are aminoethoxyvinylglycine (AVG, technical grade, Valent BioSciences Corp. Libertyville, IL); surfactant (Silwet, polyalkyleneoxide modified heptamethyltrisiloxane, Loveland Industries, Inc. Greeley, CO); MCP (EthylBloc, 0.14% a.i, AgroFresh Inc. Philadelphia, PA); and ethephon (2-chloroethyl phosphonic acid, Florel, 4.9% a.i., Southern Agricultural Insecticides, Inc. Boone, NC).

### EXAMPLE 1

Potato tubers were dipped in either 0.05% Silwet (control) or 2000 ppm AVG solution and the treated potato tubers were placed in plastic trays in dark ventilated chamber at 20 °C. AVG at 2000 ppm increased the number of sprouts per potato in Superior, Red Pontiac, and Irish Cobbler potatoes (Table 1). AVG also increased the sprout length in Superior, Kennebac, Russet Burbank, Red Norland, and Red Pontiac potatoes. AVG also decreased tip necrosis in Superior, Russet Burbank, and Red Lasoda potatoes. Thus, AVG induces significant improvement in sprouting and also decreased tip necrosis in a range of potato tuber plant varieties.

**TABLE 1**

| Effect of aminoethoxyvinylglycine (AVG) on sprout number, length, and tip necrosis (20°C, in air, dark chamber; all trials completed 22 days after treatment) | | | | | | |
|---|---|---|---|---|---|---|
| | Total sprouts/potato | | Total sprout length (cm) | | Sprouts with tip necrosis (%) | |
| Variety | Silwet (0.05% v/v) control | AVG¹ (2000 ppm) plus Silwet | Silwet (0.05%) control | AVG (2000 ppm) plus Silwet | Silwet (0.05%) control | AVG (2000 ppm) plus Silwet |
| Superior | 4.8 | 9.0*** | 19.3 | 35.3*** | 23.6 | 3.1* |
| Kennebac | 5.5 | 7.2 | 14.4 | 35.3** | 63.7 | 43.6 |
| Russet Burbank | 5.0 | 6.2 | 19.2 | 29.4** | 68.6 | 11.8*** |
| Yukon Gold | 2.8 | 2.1 | 4.7 | 4.9 | 0.0 | 0.0 |
| All Blue | 12.0 | 13.7 | 31.2 | 27.9 | 0.0 | 0.0 |
| Red Norland | 7.2 | 8.8 | 25.6 | 35.8** | 5.9 | 0.0 |
| Red Lasoda | 3.7 | 3.3 | 12.8 | 14.7 | 23.6 | 0.0* |
| Red Pontiac | 3.8 | 6.8** | 15.5 | 29.1** | 47.2 | 46.5 |
| Irish Cobbler | 4.5 | 6.0* | 20.5 | 29.7 | 45.8 | 17.1 |
| ¹Aminoethoxyvinylglycine (AVG); with 0.05% (v/v) of Silwet (i.e. 1 ml in 2 liters) Statistics: n = 6 potatoes/variety/treatment. T-test significance: *, p < 10%; **, p < 5%; ***, p < 1%. | | | | | | |

### EXAMPLE 2

Potatoes were dipped in 500 or 2000 ppm AVG solution and water-dipped potatoes served as the control. Each treatment consisted of 9 potato tubers. The treated potatoes were put in plastic trays and placed in a dark ventilated chamber at 20 °C. Sprouts were evaluated 21 days after treatment. AVG at 500 and 2000 ppm increased the number of sprouts per tuber and the sprout length in Russet Burbank and Superior (Table 2). At 2000 ppm, AVG increased the number of sprouts per tuber and the sprout length in Gold Rush. AVG reduced tip necrosis in Russet Burbank and Norkotah at the higher rate, but only reduced tip necrosis in Russet Burbank at the lower rate. Thus, AVG treatments stimulate potato sprouting, promote sprout elongation, and reduce tip necrosis.

**TABLE 2**

| Effect of aminoethoxyvinylglycine (AVG) on sprout number, length, and tip necrosis (20°C, in air, dark chamber; all trials completed 21 days after treatment). | | | | |
|---|---|---|---|---|
| Variety | Treatment | Sprouts/potato | Sprout length (cm) | Sprouts with tip necrosis (%) |
| Russet Burbank | Control¹ | 4.2 A | 12.3 AB | 90 C |
| | 500 ppm AVG | 6.2 BC | 19.7 C | 11 A |
| | 2000 ppm AVG | 7.2 C | 16.3 BC | 6 A |
| Norkotah | Control | 3.6 A | 9.2 AB | 17 B |
| | 500 ppm AVG | 2.9 A | 7.2 AB | 10 AB |
| | 2000 ppm AVG | 2.9 A | 7.0 A | 0 A |
| Gold Rush | Control | 5.1 AB | 12.2 A | 27 A |
| | 500 ppm AVG | 3.8 A | 9.0 A | 29 A |
| | 2000 ppm AVG | 5.6 AB | 17.8 B | 34 A |
| Superior | Control | 6.7 A | 11.9 A | 36 A |
| | 500 ppm AVG | 8.2 B | 13.2 AB | 30 A |
| | 2000 ppm AVG | 8.1 B | 16.3 B | 30 A |
| ¹Control: H₂O. Statistics: n = 9 potatoes/variety/treatment. Mean separation by Duncan's Multiple Range (α = 5%). | | | | |

### EXAMPLE 3

Potato tubers were dipped in water (control) or 2000 ppm AVG solution. Each treatment consisted of 9 potato tubers. The treated potatoes were then planted in soil in plastic trays and placed in a dark ventilated chamber at 20 °C. Sprouts were evaluated 19 days after treatment. Results from potatoes planted in soil (Table 3) were similar to results from potatoes placed in air (Tables 1 and 2). AVG at 2000 ppm increased the number of sprouts per tuber and the sprout length in Norkotah, Gold Rush, and Superior. AVG at 2000 ppm also reduced tip necrosis in all three varieties tested.

**TABLE 3**

| Effect of aminoethoxyvinylglycine (AVG) on sprout number, length, and tip necrosis (20°C, in soil, dark chamber; all trials completed 19 days after treatment). | | | | |
|---|---|---|---|---|
| Variety | Treatment | Sprouts/potato | Sprout length (cm) | Sprouts with tip necrosis (%) |
| Russet Burbank | Control¹ | 5.3 A | 52 A | 32 B |
| | 2000 ppmAVG | 5.8 A | 56 A | 14 A |
| Norkotah | Control | 4.0 A | 20.3 A | 48 B |
| | 2000 ppm AVG | 5.8 B | 27.7 B | 3 A |
| Gold Rush | Control | 4.7 A | 17.8 A | 49 A |
| | 2000 ppm AVG | 7.7 B | 42.1 B | 57 A |
| Superior | Control | 6.0 A | 43.0 A | 35 A |
| | 2000 ppm AVG | 8.6 B | 74.8 B | 7 B |
| ¹Control: H₂O. Statistics: n = 9 potatoes/variety/treatment. Mean separation by Duncan's Multiple Range (α = 5%). | | | | |

### EXAMPLE 4

Potato tubers were dipped in 2000 ppm AVG or 1000 ppm ethephon solution and water-dipped potatoes served as the control. Each treatment consisted of 9 potato tubers. The treated potatoes were then put in plastic trays and placed in dark ventilated chamber at 20 °C. Sprouts were evaluated 24 days after treatment. Both AVG and ethephon treatments stimulate sprouting in Russet Burbank and Superior (Table 4). However, while AVG promoted sprout elongation in potato tubers, ethephon did not. These results clearly show that AVG and ethylene have different modes of action in affecting sprout development in potatoes.

**TABLE 4**

| Effect of aminoethoxyvinylglycine (AVG) on sprout number and length (20°C, in soil, dark chamber; all trials completed 21 days after treatment). | | | |
|---|---|---|---|
| Variety | Treatment | Sprouts/potato | Sprout length (cm) |
| Russet Burbank | Control¹ | 5.9 A | 16.6 A |
| | 2000 ppm AVG | 9.2 B | 30.3 B |
| | 1000 ppm ethephon | 10.8 B | 15.6 A |
| Superior | Control | 5.4 A | 11.4 A |
| | 2000 ppm AVG | 9.9 B | 27.2 C |
| | 1000 ppm ethephon | 9.9 B | 16.8 AB |
| ¹Control: H₂O. Statistics: n = 9 potatoes/variety/treatment. Mean separation by Duncan's Multiple Range (α = 5%). | | | |

### EXAMPLE 5

Potato tubers were treated with 50 ppm MCP in a closed plastic drum (30 gallon) for 20 hr and untreated potatoes served as the control. Each treatment consisted of 9 potato tubers. The treated potatoes were then planted in soil in plastic trays and placed in a ventilated chamber at 10 °C. The number of emerged sprouts was counted 15 days after treatment. MCP treatment increased the number of emerged sprouts per potato tuber at 10 °C in Russet Burbank, Norkotah, and Gold Rush, but not in Superior (Table 5).

**TABLE 5**

| Effect of 1-methylcyclopropene (MCP) sprout number and emergence of potatoes from soil (10°C, in soil, dark chamber; sprouts emerged from soil were counted 15 and 18 days after treatment). | | | | | |
|---|---|---|---|---|---|
| Variety | Treatment | 15 days after treatment | | 18 days after treatment | |
| | | Sprouts/Tuber | % Emergence | Sprouts/Tuber | % Emergence |
| Russet Burbank | Control¹ | 0.6 A | 44 | 1.8 A | 67 |
| | 50 ppm MCP² | 2.4 B | 100 | 2.9 B | 100 |
| Norkotah | Control | 0.3 A | 22 | 0.8 A | 56 |
| | 50 ppm MCP | 1.7 B | 78 | 2.0 B | 78 |
| Gold Rush | Control | 0.1 A | 11 | 0.1 A | 11 |
| | 50 ppm MCP | 0.8 B | 44 | 1.3 B | 56 |
| Superior | Control | 0.7 A | 78 | 1.4 A | 78 |
| | 50 ppm MCP | 1.2 A | 89 | 1.6 A | 89 |
| ¹ Control: Untreated. ² 50 ppm 1-methylcyclopropene treated for 20 hr. Statistics: n = 9 potatoes/variety/treatment. Mean separation by Duncan's Multiple Range (α = 5%). | | | | | |

## Claims

1. A method of treating potatoes comprising administering to potato tubers an effective amount of at least one ethylene synthesis inhibitor or ethylene action inhibitor wherein the number of sprouts per potato tuber and the length of said sprouts are increased.

2. The method according to claim 1, wherein the ethylene synthesis inhibitor is aminoethoxyvinylglycine or its salts or derivatives.

3. The method according to claim 2, whrein aminoethoxyvinylglycine is administered in a water-based solution at a concentration of from about 1 ppm to about 5000 ppm.

4. The method according to claim 3, wherein the water-based aminoethoxyvinylglycine solution further comprises about 0.01 to 0.5% v/v surfactant.

5. The method according to claim 1, wherein the ethylene action inhibitor is 1-methylcyclopropene or its derivatives.

## Patentansprüche

1. Verfahren zur Behandlung von Kartoffeln, das die Verabreichung einer wirksamen Menge mindestens eines Ethylen-Synthesehemmers oder Ethylen-Wirkungshemmers an Kartoffelknollen umfasst, worin die Anzahl der Triebe pro Kartoffelknolle und die Länge der Triebe vergrößert werden.

2. Verfahren gemäß Anspruch 1, worin der Ethylen-Synthesehemmer Aminoethoxyvinylglycin oder seine Salze oder Derivate ist.

3. Verfahren gemäß Anspruch 2,-worin Aminoethoxyvinylglycin in einer Lösung auf Wasserbasis in einer Konzentration von ungefähr 1 ppm bis ungefähr 5000 ppm verabreicht wird.

4. Verfahren gemäß Anspruch 3, worin die Aminoethoxyvinylglycinlösung auf Wasserbasis weiter ungefähr 0,01 bis 0,5% v/v grenzflächenaktiven Stoff umfasst.

5. Verfahren gemäß Anspruch 1, worin der Ethylen-Wirkungshemmer 1-Methylcyclopropen oder seine Derivate ist.

## Revendications

1. Procédé de traitement de pommes de terre comprenant l'administration à des tubercules de pommes de terre d'une quantité efficace d'au moins un inhibiteur de la synthèse de l'éthylène ou un inhibiteur de l'action de l'éthylène, où le nombre de germes par tubercule de pomme de terre et la longueur desdits germes sont accrus.

2. Procédé selon la revendication 1, où l'inhibiteur de la synthèse de l'éthylène est l'aminoéthoxyvinylglycine ou ses sels ou dérivés.

3. Procédé selon la revendication 2, où l'aminoéthoxyvinylglycine est administrée dans une solution à base d'eau à une concentration d'environ 1 ppm à environ 5 000 ppm.

4. Procédé selon la revendication 3, où la solution d'aminoéthoxyvinylglycine à base d'eau comprend en outre environ 0,01 à 0,5 % v/v de tensioactif.

5. Procédé selon la revendication 1, où l'inhibiteur de l'action de l'éthylène est le 1-méthylcyclopropène ou ses dérivés.
